# EUROPEAN PATENT APPLICATION

(11) **EP 3 854 644 A1**
(43) Date of publication of application: **28.07.2021**
(21) Application number: 21151805.5
(22) Date of filing: 15.01.2021
(51) Int. Cl.: B60T 17/22

(54) **STATE DETERMINATION DEVICE AND PROGRAM FOR RELAY VALVE OR SERVICE SOLENOID VALVE OF RAILWAY VEHICLE AS WELL AS BRAKE CONTROL DEVICE OF RAILWAY VEHICLE**

(30) Priority: 24.01.2020 JP 2020009706
(71) Applicant: Nabtesco Corporation, Tokyo 102-0093 (JP)
(72) Inventor: KITAHARA, Yukinori, Tokyo, 102-0093 (JP)
(74) Representative: Grünecker Patent- und Rechtsanwälte PartG mbB

(57) **Abstract**

A determination unit (76) in a device for a railway vehicle determines the state of a service solenoid valve (20) based on a response time h1 of a commanded pressure (AS) to an opening-closing command signal (G) and a change rate (α1) of the commanded pressure (AS) that changes according to a change of the opening-closing command signal (G) (steps S110, S120, S130, S210). The determination unit (76) further determines the state of the relay valve (30) based on a response time (h2) of the output pressure (BS) to the commanded pressure (AS), a change rate (α2) of the output pressure (BS) that changes according to a change of the commanded pressure (AS), and a difference between the commanded pressure (AS) and the output pressure (BS) (steps S140, S150, S160, S170, S220, S230).

## Description

The present invention relates to a device and a program for a railway vehicle, and in particular, a state determination device for a relay valve of a railway vehicle, a state determination device for a service solenoid valve of a railway vehicle, a state determination program for a relay valve of a railway vehicle, a state determination program for a service solenoid valve of a railway vehicle, and a brake control device of a railway vehicle

The railway vehicle disclosed in Japanese Laid-Open Patent Publication No. 2004-262405 ("the '405 Publication") is equipped with a pressure regulator for regulating the pressure supplied to a brake cylinder. A service solenoid valve and a relay valve are disposed inside a housing of the pressure regulator. Compressed air from an air reservoir is supplied to the service solenoid valve and the relay valve. The service solenoid valve adjusts the compressed air to a commanded pressure according to a brake command signal from a driver's cab and outputs it to the relay valve. The relay valve outputs the compressed air having a pressure corresponding to the commanded pressure supplied from the service solenoid valve in an amount larger than the amount of the air outputted by the service solenoid valve.

When some trouble occurs in the service solenoid valve and/or the relay valve in the technique described in the '405 Publication, the brake system may not operate properly. Therefore, it is preferable to check if there is an abnormality in the service solenoid valve and the relay valve. However, it takes much time to disassemble the service solenoid valve and the relay valve to examine their inside in order to check the states of the service solenoid valve and the relay valve. It is desired to develop a technique for easily determining the state of the service solenoid valve and/or the relay valve. In the technique described in the '405 Publication, no study has been made on determining the state of the service solenoid valve and the relay valve, and there is room for improvement in this respect.

The present invention has been made in view of the above, and one object of the present invention is to easily determine the state of the service solenoid valve or the relay valve.

According to one aspect of the present invention, provided is a state determination device for a relay valve of a railway vehicle. The state determination device for a relay valve of a railway vehicle includes: an acquisition unit acquiring an output pressure of a relay valve that amplifies a flow of air supplied thereto to output the amplified flow of air to a brake cylinder, the output pressure being as large as a commanded pressure which a service solenoid valve generates in accordance with a command signal, and the acquisition unit also acquiring at least one of the command signal and the commanded pressure; and a determination unit determining a state of the relay valve based on the output pressure in a determination period after at least one of the command signal and the commanded pressure changes. By acquiring the pressure to determine the state of the relay valve as described above, there is no need to disassemble the relay valve to check the inside or detect the actual movement of the mechanism in the relay valve. Therefore, the state of the relay valve can be easily determined.

In the state determination device for a relay valve of a railway vehicle, the determination unit may determine the state of the relay valve based on at least one of a timing at which the output pressure starts to change in accordance with a change of at least one of the command signal and the commanded pressure, and a change rate of the output pressure that changes in accordance with a change of at least one of the command signal and the commanded pressure. According to the above configuration, it is possible to know the deterioration of the responsiveness and operability of the relay valve due to the increase in sliding resistance caused by foreign substances sticking therearound or the like.

In the state determination device for a relay valve of a railway vehicle, when a change rate of the output pressure per unit time from a state where the output pressure changes in accordance with a change of the commanded pressure becomes less than a predetermined value and a change rate of the commanded pressure and the change rate of the output pressure continue to be less than predetermined values for a certain period of time, the determination unit may determine the state of the relay valve based on a trend of change of a difference between the commanded pressure and the output pressure during the period of time. If the difference between the commanded pressure and the output pressure increases with time under the condition that fluctuations of both the commanded pressure and the output pressure are small, it is supposed that air leakage occur in the relay valve as an abnormality thereof. According to the above configuration, it is possible to know the state of the relay valve related to an abnormality such as an air leak.

As for the state determination device for a relay valve of a railway vehicle, the relay valve may be one of a plurality of relay valves provided in a railway vehicle. In this case, the acquisition unit may acquire the output pressure during the determination period for the plurality of relay valves in the railway vehicle, and the determination unit may determine the state of the relay valve based on comparison of the output pressures of the plurality of relay valves during the determination period. Here, it is assumed that the plurality of relay valves mounted on the same railway vehicle have the same degree of age deterioration as they were initially installed unused new ones. By comparing ones having a similar degree of age deterioration, the state of the relay valve can be determined separately from the degree of age deterioration.

According to another aspect of the present invention, provided is a state determination device for a service solenoid valve of a railway vehicle. The state determination device for a service solenoid valve of a railway vehicle includes an acquisition unit acquiring a commanded pressure of a service solenoid valve and a command signal, the service solenoid valve generating, in accordance with the command signal, the commanded pressure that defines an output pressure of a relay valve, and the relay valve amplifying a flow of air supplied thereto to output the amplified flow of air to a brake cylinder; and a determination unit determining a state of the service solenoid valve based on the commanded pressure during a determination period after the command signal changes. By acquiring the pressure to determine the state of the service solenoid valve as described above, there is no need to disassemble the service solenoid valve to check the inside or detect the actual movement of the mechanism in the relay valve. Therefore, the state of the service solenoid valve can be easily determined.

In the state determination device for a service solenoid valve of a railway vehicle, the determination unit may determine the state of the service solenoid valve based on at least one of a timing at which the commanded pressure starts to change in accordance with a change of the command signal, and a change rate of the commanded pressure that changes in accordance with a change of the command signal. According to the above configuration, it is possible to know the deterioration of the responsiveness and operability of the service solenoid valve due to the increase in sliding resistance caused by foreign substances sticking therearound or the like.

As for the state determination device for a service solenoid valve of a railway vehicle, the service solenoid valve is one of a plurality of service solenoid valves provided in a railway vehicle. The acquisition unit may acquire the commanded pressure during the determination period for the plurality of service solenoid valves in the railway vehicle, and the determination unit may determine the state of the service solenoid valve based on comparison of the commanded pressures of the plurality of service solenoid valves during the determination period. Here, it is assumed that the plurality of service solenoid valves mounted on the same railway vehicle have the same degree of age deterioration as they were initially installed unused new ones. By comparing ones having a similar degree of age deterioration, the state of the service solenoid valve can be determined separately from the degree of age deterioration.

According to yet another aspect of the present invention, provided is a state determination program for a relay valve of a railway vehicle. The state determination program for a relay valve of a railway vehicle causes a computer to perform the steps of: acquiring an output pressure of a relay valve that amplifies a flow of air supplied thereto to output the amplified flow of air to a brake cylinder, the output pressure being as large as a commanded pressure which a service solenoid valve generates in accordance with a command signal, and the acquisition unit also acquiring at least one of the command signal and the commanded pressure; and determining a state of the relay valve based on the output pressure in a determination period after at least one of the command signal and the commanded pressure changes. The state determination program for a relay valve of a railway vehicle may be stored on a computer-readable storage medium. By acquiring the pressure to determine the state of the relay valve as described above, there is no need to disassemble the relay valve to check the inside or detect the actual movement of the mechanism in the relay valve. Therefore, the state of the relay valve can be easily determined.

According to still yet another aspect of the present invention, provided is a state determination program for a service solenoid valve of a railway vehicle. The state determination program for a service solenoid valve of a railway vehicle causes a computer to perform the steps of: acquiring a commanded pressure of a service solenoid valve and a command signal, the service solenoid valve generating, in accordance with the command signal, the commanded pressure that defines an output pressure of a relay valve, and the relay valve amplifying a flow of air supplied thereto to output the amplified flow of air to a brake cylinder; and determining a state of the service solenoid valve based on the commanded pressure during a determination period after the command signal changes. The state determination program for a service solenoid valve of a railway vehicle may be stored on a computer-readable storage medium. By acquiring the pressure to determine the state of the service solenoid valve as described above, there is no need to disassemble the service solenoid valve to check the inside or detect the actual movement of the mechanism in the relay valve. Therefore, the state of the service solenoid valve can be easily determined.

According to yet another aspect of the present invention, provided is a brake control device for a railway vehicle that includes an acquisition unit acquiring an output pressure of a relay valve that amplifies a flow of air supplied thereto to output the amplified flow of air to a brake cylinder, the output pressure being as large as a commanded pressure which a service solenoid valve generates in accordance with a command signal, and the acquisition unit also acquiring at least one of the command signal and the commanded pressure; a determination unit determining a state of the relay valve based on the output pressure in a determination period after at least one of the command signal and the commanded pressure changes; and a control unit controlling a brake of the railway vehicle based on a result of the determination by the determination unit. In this case, the state of the relay valve can be easily determined so that it is appropriate for the control of the brake to which the state of the relay valve can be reflected.

According to still yet another aspect of the present invention, provided is a brake control device for a railway vehicle that includes an acquisition unit acquiring a commanded pressure of a service solenoid valve and a command signal, the service solenoid valve generating, in accordance with the command signal, the commanded pressure that defines an output pressure of a relay valve, and the relay valve amplifying a flow of air supplied thereto to output the amplified flow of air to a brake cylinder; a determination unit determining a state of the service solenoid valve based on the commanded pressure during a determination period after the command signal changes; and a control unit controlling a brake of the railway vehicle based on a result of the determination by the determination unit. In this case, the state of the service solenoid valve can be easily determined so that it is appropriate for the control of the brake to which the state of the service solenoid valve can be reflected.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Fig. 1 is a schematic configuration diagram of a compressed air supply mechanism;
Fig. 2 illustrates an example of temporal changes for state determination; and
Fig. 3 is a flowchart showing steps of a state determination process.

A railway vehicle brake control device including a railway vehicle relay valve state determination device and a railway vehicle service solenoid valve state determination device according to one embodiment of the present invention will be hereinafter described with reference to the accompanying drawings. First, a mechanism for supplying compressed air to a brake in a railway vehicle will be described.

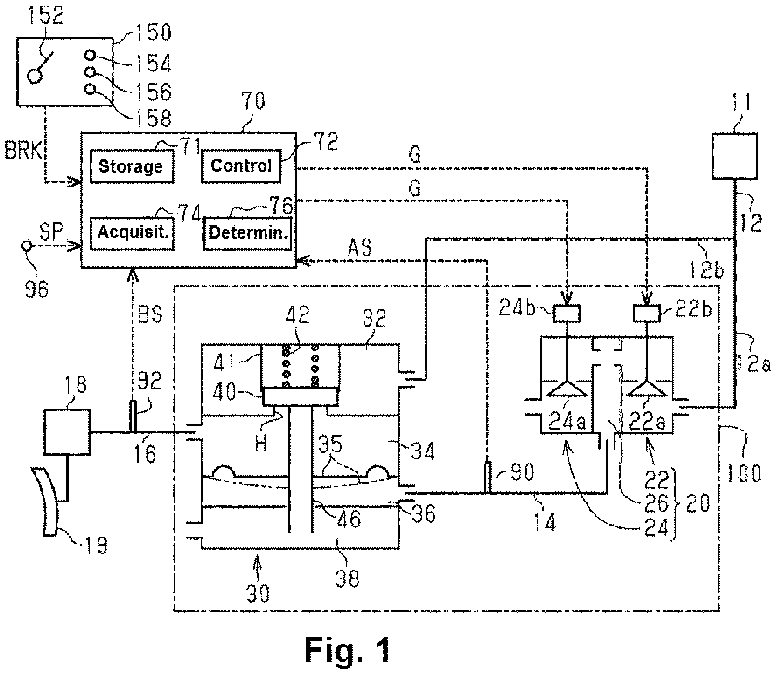

As shown in Fig. 1, a railway vehicle is equipped with air tank 11 which is air pressure supply source. Air is pumped to the air tank 11 by a pump (not shown), so that the pressure in the air tank 11 is higher than the atmospheric pressure. The air tank 11 is coupled to a pressure regulator 100 via a first connection passage 12. The first connection passage 12 is branched on its downstream side into two passages, a first branch passage 12a and a second branch passage 12b.

The pressure regulator 100 includes a service solenoid valve 20 and a relay valve 30. The first branch passage 12a of the first connection passage 12 is connected to the service solenoid valve 20. The service solenoid valve 20 adjusts a pressure of compressed air supplied from the air tank 11 to a commanded pressure AS according to an opening-closing command signal G which will be described later and outputs the adjusted compressed air.

The service solenoid valve 20 is coupled to the relay valve 30 via a second connection passage 14. The second branch passage 12b of the first connection passage 12 is also connected to the relay valve 30. The relay valve 30 adjusts the pressure of the compressed air supplied from the air tank 11 to an output pressure BS that corresponds to a commanded pressure AS and outputs the adjusted compressed air. Here, the commanded pressure AS is as large as the output pressure BS. The relay valve 30 outputs a larger amount of air than the air supplied by the service solenoid valve 20. That is, the relay valve 30 amplifies and outputs the flow rate of the air output from the service solenoid valve 20. The relay valve 30 is coupled, via a third connection passage 16, to a brake cylinder 18 that operates a brake 19. The output pressure BS output from the relay valve 30 is supplied to the brake cylinder 18 via the third connection passage 16. The railway vehicle is provided with a plurality of the brake cylinders 18 and brakes 19. The pressure regulator 100 is provided for each set of the brake cylinder 18 and the brake 19.

A commanded pressure detection sensor 90 that senses the commanded pressure AS, which is the pressure in the second connection passage 14, is provided in the second connection passage 14. Further, an output pressure detection sensor 92 that senses the output pressure BS, which is the pressure in the third connection passage 16, is provided in the third connection passage 16.

The above-mentioned service solenoid valve 20 includes a supply solenoid valve 22 which is a two-way solenoid valve, a discharge solenoid valve 24 which is a two-way solenoid valve, and a joint passage 26 that joints outlets of flow paths of these two solenoid valves 22 and 24. The first branch passage 12a of the first connection passage 12 is connected to an inlet of the flow path of the supply solenoid valve 22. A valve body 22a for opening and closing the flow path of the supply solenoid valve 22 is provided in the flow path. The valve body 22a is driven by a solenoid 22b. Although not shown, the valve body 22a is biased by a spring in a direction opposite to a direction in which the valve body is pushed by the solenoid 22b.

The inlet of the flow path of the discharge solenoid valve 24 is open to the atmosphere. A valve body 24a that opens and closes the flow path of the discharge solenoid valve 24 is provided in the flow path. The valve body 24a is driven by a solenoid 24b. Although not shown, the valve body 24a is biased by a spring in a direction opposite to a direction in which the valve body is pushed by the solenoid 24b.

The second connection passage 14 is connected to an outlet of the joint passage 26. The commanded pressure AS, which is the pressure in the joint passage 26, is determined depending on opening or closing of the supply solenoid valve 22 and opening or closing of the discharge solenoid valve 24. That is, when the supply solenoid valve 22 is open and the discharge solenoid valve 24 is close, the commanded pressure AS rises to the pressure in the air tank 11, which is the upper limit. When both the supply solenoid valve 22 and the discharge solenoid valve 24 are closed, the commanded pressure AS is maintained constant. When the supply solenoid valve 22 is closed and the discharge solenoid valve 24 is open, the commanded pressure AS drops to the atmospheric pressure, which is the lower limit. The opened or closed state of the supply solenoid valve 22 and the opened or closed state of the discharge solenoid valve 24 are controlled by the opening-closing command signal G described later. The commanded pressure AS is generated depending on the opened/closed state of the supply solenoid valve 22 and the discharge solenoid valve 24 according to the opening-closing command signal G.

In the relay valve 30, an input chamber 32 into which the compressed air from the air tank 11 is supplied is defined. Thus, the second branch passage 12b of the first connection passage 12 is connected to the input chamber 32. Next to the input chamber 32, an output chamber 34 in which the output pressure BS is generated is defined. The third connection passage 16 is connected to the output chamber 34. A control chamber 36 into which the commanded pressure AS is input is defined on the side opposite to the input chamber 32 with respect to the output chamber 34. Thus, the second connection passage 14 is connected to the control chamber 36. On the side opposite to the output chamber 34 with respect to the control chamber 36, a discharge chamber 38 for reducing the pressure in the output chamber 34 is defined. The discharge chamber 38 is open to the atmosphere.

A communication hole H for communicating the input chamber 32 and the output chamber 34 penetrates a wall that separates the input chamber 32 and the output chamber 34. The communication hole H is closed by a valve body 40 from the side of the input chamber 32. The valve body 40 has a disk shape. The valve body 40 is biased by a spring 42 in a direction from the side of the input chamber 32 toward the side of the output chamber 34. Further, a cylindrical guide 41 projects toward the communication hole H from a wall of the input chamber 32 facing the communication hole H. An inner diameter of the guide 41 is substantially the same as an outer diameter of the valve body 40, and an outer peripheral surface of the valve body 40 is slidably supported by an inner peripheral surface of the guide 41.

The wall that separates the output chamber 34 and the control chamber 36 is made of a flexible diaphragm 35. A cylindrical hollow shaft 46 penetrates the diaphragm 35 in a thickness direction of the diaphragm 35. When the pressure in the output chamber 34 and the pressure in the control chamber 36 are equal, one end of the hollow shaft 46 is situated near the communication hole H, and the other end of the hollow shaft 46 is situated in the discharge chamber 38. An outer peripheral surface of the hollow shaft 46 is fixed to the diaphragm 35. The hollow shaft 46 moves in the axial direction when the diaphragm 35 bends. Further, the hollow shaft 46 penetrates a wall that separates the control chamber 36 and the discharge chamber 38, and is slidably supported by the wall.

In the relay valve 30, the diaphragm 35 is bent by a pressure difference between the control chamber 36 and the output chamber 34, so that the output pressure BS, which is the pressure in the output chamber 34, is determined by the bent of the diaphragm. Specifically, when the pressure in the control chamber 36 is larger than the pressure in the output chamber 34, the diaphragm 35 is bent toward the output chamber 34. With this, the hollow shaft 46 pushes the valve body 40 into the input chamber 32 against the biasing force of the spring 42. Consequently, the input chamber 32 and the output chamber 34 are communicated with each other, the compressed air flows from the input chamber 32 into the output chamber 34, and the pressure in the output chamber 34 increases. When the pressure in the output chamber 34 becomes equal to the pressure in the control chamber 36, the diaphragm 35 is not bent and the valve body 40 returns to the position where it closes the communication hole H. Whereas when the pressure in the control chamber 36 is smaller than the pressure in the output chamber 34, the diaphragm 35 is bent toward the control chamber 36. Accordingly, the hollow shaft 46 separates from the valve body 40. As a result, the output chamber 34 and the discharge chamber 38 are communicated with each other through the inner peripheral space of the hollow shaft 46, and the compressed air is discharged from the output chamber 34 to the discharge chamber 38. When the pressure in the output chamber 34 becomes equal to the pressure in the control chamber 36, the diaphragm 35 is not bend, the hollow shaft 46 comes into contact with the valve body 40, and the communication between the output chamber 34 and the discharge chamber 38 via the hollow shaft 46 is closed.

A driver's cab 150 of the railway vehicle is provided with an operating lever 152 for driving the brake 19. The driver's cab 150 is also provided with a first abnormality notification lamp 154 for notifying an abnormality related to the responsiveness or moving speed of the service solenoid valve 20. The driver's cab 150 is further provided with a second abnormality notification lamp 156 for notifying an abnormality related to the responsiveness or moving speed of the relay valve 30. The driver's cab 150 is further provided with a third abnormality notification lamp 158 for notifying an abnormality related to air leakage from the relay valve 30. Although not shown, the driver's cab 150 is also provided with indicators such as a speedometer.

Next, a description is given of a control configuration of the pressure regulator 100. The railway vehicle is equipped with a brake control device 70 that controls the brake 19. The brake control device 70 may be formed of one or more processors that perform various processes in accordance with computer programs (software). Alternatively, the brake control device 70 may be formed of one or more dedicated hardware circuits such as application-specific integrated circuits (ASICs) that perform at least a part of the various processes, or it may be formed of circuitry including a combination of such circuits. The processors include a CPU and a memory such as a RAM or ROM. The memory stores program codes or instructions configured to cause the CPU to perform processes. The memory, in other words, a computer-readable storage medium, encompasses any kind of available storage medium accessible by a general-purpose or dedicated computer. The break control device 70 also includes a non-volatile storage unit 71. The brake control device 70 controls the brake 19 through control of the pressure regulator 100. The brake control device 70 also serves as a state determination device for the pressure regulator 100, that is, a state determination device for the service solenoid valve 20 and a state determination device for the relay valve 30. The brake control device 70 performs the state determinations based on a state determination program for the relay valve 30 of the railway vehicle and a state determination program of the service solenoid valve 20 of the railway vehicle stored in, for example, a computer-readable storage medium.

A signal relating to the commanded pressure AS detected by the commanded pressure detection sensor 90 is supplied to the brake control device 70. A signal relating to the output pressure BS detected by the output pressure detection sensor 92 is also supplied to the brake control device 70. Further, a sensing signal from the speed sensor 96 that senses a traveling speed SP of the railway vehicle is supplied to the brake control device 70. When a brake operation in which the operating lever 152 of the driver's cab 150 is operated is performed, a brake command signal BRK from the operating lever 152 is supplied to the brake control device 70. The brake command signal BRK is a signal indicating a braking force requested by the driver of the railway vehicle.

The brake control device 70 includes a control unit 72 for controlling the service solenoid valve 20. The control unit 72 controls excitation or demagnetization of the solenoids 22b and 24b in the service solenoid valves 20 by supplying the opening-closing command signal G to the service solenoid valve 20 in accordance with the brake command signal BRK from the driver's cab 150. Specifically, to increase a braking force of the brake 19, the control unit 72 controls the service solenoid valve 20 such that it operates on a pressure increase mode in which the supply solenoid valve 22 is opened and the discharge solenoid valve 24 is closed to increase the commanded pressure AS. To maintain the braking force of the brake 19, the control unit 72 controls the service solenoid valve 20 such that it operates on a pressure maintain mode in which the supply solenoid valve 22 and the discharge solenoid valve 24 are both closed to maintain the commanded pressure AS constant. To decrease the braking force of the brake 19, the control unit 72 controls the service solenoid valve 20 such that it operates on a pressure decrease mode in which the supply solenoid valve 22 is closed and the discharge solenoid valve 24 is opened to decrease the commanded pressure AS. When the control unit 72 controls the service solenoid valve 20 to be any one of the modes, the control unit 72 switches the opening-closing command signal G to a signal dedicated to that mode. By switching the opening-closing command signal G, the control unit 72 supplies the opening-closing command signal G dedicated to respective mode to the service solenoid valve 20. Here, when the control unit 72 controls the service solenoid valve 20 to each mode, the control unit 72 supplies the opening-closing command signals G separately to the solenoids 22b and 24b of the service solenoid valve 20. However, for convenience of explanation, these are hereunder collectively referred to as the opening-closing command signal G.

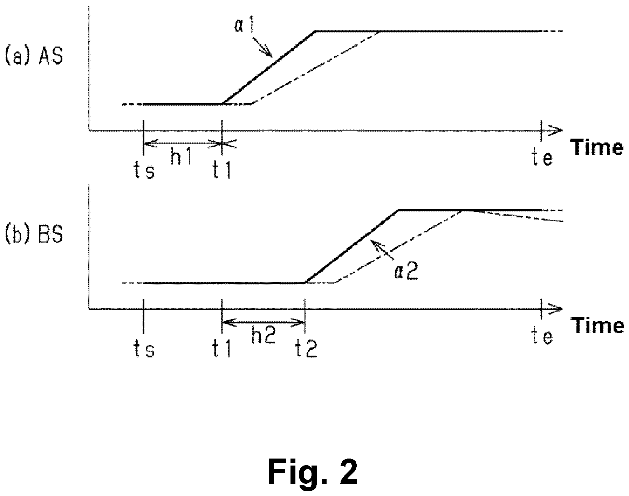

When the control unit 72 receives the brake command signal BRK from the operating lever 152 associated with a brake operation, the control unit 72 executes the following braking process. That is, the control unit 72 calculates a target value of the commanded pressure AS based on a requested braking force. Then, the control unit 72 switches the opening-closing command signal G to a pressure increase mode signal to controls the service solenoid valve 20 such that it operates on the pressure increase mode. When an actually measured value of the commanded pressure AS reaches the target value, the control unit 72 switches the opening-closing command signal G to a pressure maintain mode signal to control the service solenoid valve 20 such that it operates on the pressure maintain mode. Through the braking process, the commanded pressure AS rises to the target value and then is maintained constant as shown in Fig. 2. The output pressure BS changes following the commanded pressure AS. Operations of the service solenoid valve 20 and the relay valve 30 in the braking process will be described later.

The brake control device 70 includes an acquisition unit 74 that acquires the commanded pressure AS and the output pressure BS and stores the acquired commanded pressure AS and the output pressure BS in the storage unit 71. The acquisition unit 74 acquires the commanded pressure AS and the output pressure BS related to the braking process, and stores temporal changes in the commanded pressure AS and the output pressure BS in the storage unit 71 as temporal changes for state determination. That is, as shown in Fig. 2, the acquisition unit 74 starts acquisition of the commanded pressure AS and the output pressure BS from a start timing "ts" at which the opening-closing command signal G is switched to the pressure increase mode signal in response to the brake command signal BRK from the operating lever 152 generated in associated with a brake operation. The acquisition unit 74 continues to acquire the commanded pressure AS and the output pressure BS until an end timing "te" at which a predetermined waiting time elapses after the opening-closing command signal G is switched to the pressure maintain mode signal. At the end timing "te", the acquisition unit 74 ends the acquisition of the commanded pressure AS and the output pressure BS. The acquisition unit 74 stores the temporal changes in the acquired commanded pressure AS and the acquired output pressure BS from the start timing "ts" to the end timing "te" as the temporal changes for state determination. The above-mentioned waiting time is determined through experiments or the like as a time longer than the elapsed time from when the opening-closing command signal G is switched to the pressure maintain mode signal to when the rise of the output pressure BS finishes, that is, the elapsed time from when the rise of the commanded pressure AS is completed and to when the rise of the output pressure BS that changes following the commanded pressure AS is completed. The process in which the acquisition unit 74 acquires the commanded pressure AS and the output pressure BS corresponds to an acquisition process.

The temporal changes for state determination are temporal changes in the commanded pressure AS and the output pressure BS in a determination period, which is from the start timing "ts" to the end timing "te", or from when the opening-closing command signal G is switched to the pressure increase mode signal to when the output pressure BS is maintained constant for a certain period of time after the rise of the output pressure BS finishes.

As described above, the temporal changes for state determination is a change with time from the start timing "ts" when the opening-closing command signal G is switched to the pressure increase mode signal in response to the brake command signal BRK. That is, the temporal changes for state determination reflects the timing at which the opening-closing command signal G is switched to the pressure increase mode signal in response to the brake command signal BRK. The acquisition unit 74 that acquires the temporal changes for state determination obtains information on a change of the brake command signal BRK and a change of the opening-closing command signal G caused by the change of the brake command signal BRK.

When the state determination process described later is executed based on the temporal changes for state determination stored in the storage unit 71 and the process has been completed, the acquisition unit 74 erases the temporal changes for state determination from the storage unit 71. Then, when the opening-closing command signal G is switched to the pressure increase mode signal again in response to the brake command signal BRK from the operating lever 152 of the driver's cab 150, the acquisition unit 74 acquires the commanded pressure AS and the output pressure BS of the time and stores as the temporal changes for state determination.

The brake control device 70 includes a determination unit 76 that determines the states of the service solenoid valve 20 and the relay valve 30 based on the temporal changes for state determination stored in the storage unit 71. As described above, the temporal changes for state determination are temporal changes in the commanded pressure AS and the output pressure BS during the determination period starting from when the opening-closing command signal G is switched to the pressure increase mode signal. Thus, the determination unit 76 determines the states of the service solenoid valve 20 and the relay valve 30 based on the commanded pressure AS and the output pressure BS during the determination period after the opening-closing command signal G is switched to the pressure increase mode signal.

The determination unit 76 determines the state of the service solenoid valve 20 based on a timing t1 at which the commanded pressure AS starts to change in response to the switching of the opening-closing command signal G to the pressure increase mode signal. Specifically, the determination unit 76 determines the state of the service solenoid valve 20 based on a response time h1 which is a period elapsing between the above-mentioned start timing "ts" at which the opening-closing command signal G is switched to the pressure increase mode and the timing t1 at which the commanded pressure AS starts to change.

Further, the determination unit 76 determines the state of the service solenoid valve 20 based on a change rate α1 of the commanded pressure AS after the commanded pressure AS starts to change. Here, the change rate α1 of the commanded pressure AS is an average value of the change rate of the commanded pressure AS per unit time in a duration of change from the start of change of the commanded pressure AS to the end of the change of the commanded pressure AS. That is, the change rate α1 of the commanded pressure AS is calculated by subtracting the commanded pressure AS as of the timing t1 at which the commanded pressure AS starts to change from the commanded pressure AS as of the timing at which the commanded pressure AS finished changing, and then dividing the obtained value by the length of the duration of change.

When the commanded pressure AS changes, the determination unit 76 determines the state of the relay valve 30 based on a timing t2 at which the output pressure BS starts to change in accordance with the change of the commanded pressure AS. Specifically, the determination unit 76 determines the state of the relay valve 30 based on a response time h2, which is a period elapsing between the timing t1 at which the commanded pressure AS starts to change and the timing t2 at which the output pressure BS starts to change. Further, the determination unit 76 determines the state of the relay valve 30 based on a change rate α2 of the output pressure BS after the output pressure BS starts to change in accordance with the change of the commanded pressure AS. Here, similarly to the change rate α1 of the commanded pressure AS, the change rate α2 of the output pressure BS is an average value of the change rate of the output pressure BS per unit time in a duration of change from the start of change of the output pressure BS to the end of the change of the output pressure BS.

Further, when the change rate of the output pressure BS per unit time becomes less than a predetermined value from the state where the output pressure BS changes in accordance with the change of the commanded pressure AS and the change rate of the output pressure BS per unit time continues to be less than the predetermined value for a certain period of time, the determination unit 76 determines the state of the relay valve 30 based on a trend of change of a difference between the commanded pressure AS and the output pressure BS during the period of time. That is, the determination unit 76 determines the state of the relay valve 30 based on a pressure difference Z obtained by subtracting the commanded pressure AS from the output pressure BS as of when the rises of both the commanded pressure AS and the output pressure BS are completed after the opening-closing command signal G is switched from the pressure increase mode signal to the pressure maintain mode signal.

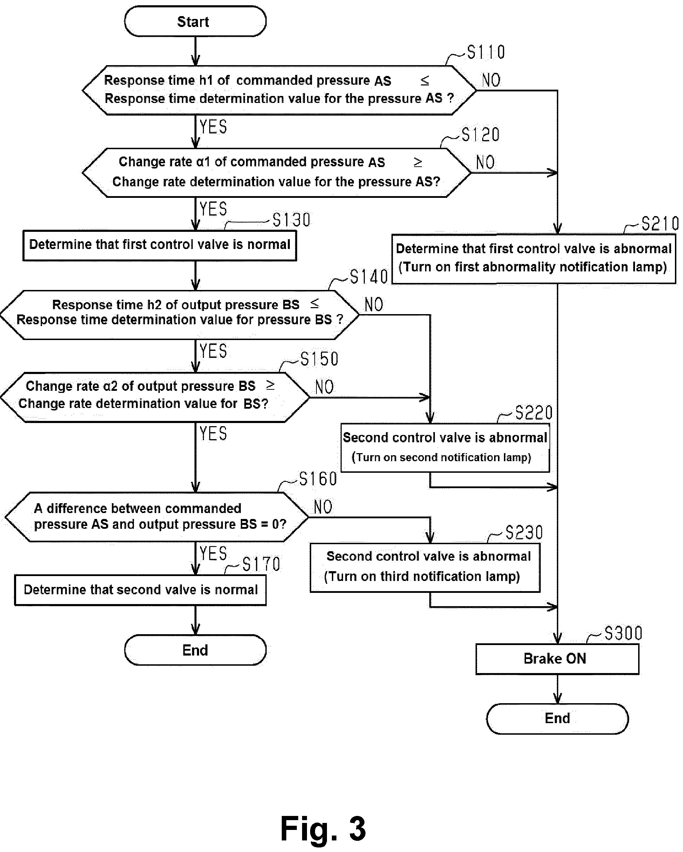

With reference to Fig. 3, a description is given of the state determination process performed by the brake control device 70. The brake control device 70 starts the state determination process when the acquisition unit 74 completes the storage of the temporal changes for state determination. Note that the brake control device 70 performs the state determination process while the railway vehicle is traveling.

As shown in Fig. 3, when the brake control device 70 starts the state determination process, the process proceeds to step S110. In step S110, the determination unit 76 in the brake control device 70 determines whether the response time h1 of the commanded pressure AS is equal to or less than a predetermined response time determination value for the commanded pressure AS. This response time determination value is stored in the storage unit 71. In the determination in step S110, the determination unit 76 refers to the temporal change for state determination stored in the storage unit 71, and calculates the response time h1 from when the opening-closing command signal G is switched to the pressure increase mode signal to when the commanded pressure AS starts to increase, which is the period elapsed from the start timing "ts" of the temporal change for state determination to the timing t1 at which the commanded pressure starts to increase. Then, the determination unit 76 refers to the response time determination value for the commanded pressure AS stored in the storage unit 71, and compares the calculated response time h1 with the stored response time determination value for the commanded pressure AS. As for the valve bodies 22a and 24a of the service solenoid valve 20, an abnormality related to their operation such as an increase in sliding resistance caused by foreign substances sticking therearound may occur. The response time determination value for the commanded pressure AS is determined by experiments or the like as an upper limit value of the response time h1 when the service solenoid valve 20 is operating normally without such an abnormality.

When the determination unit 76 determines that the calculated response time h1 is larger than the response time determination value for the commanded pressure AS (step S110: NO), the determination unit 76 proceeds to step S210. In step S210, the determination unit 76 determines that the service solenoid valve 20 has an abnormality. Then, the determination unit 76 turns on the first abnormality notification lamp 154 in the driver's cab 150. Subsequently, the determination unit 76 proceeds to step S300.

In step S300, the control unit 72 performs a process of braking the railway vehicle. After executing step S300, the control unit 72 ends the series of steps.

Whereas when the determination unit 76 determines in step S110 that the calculated response time h1 is equal to or less than the response time determination value for the commanded pressure AS (step S110: YES), the determination unit 76 proceeds to step S120.

In step S120, the determination unit 76 determines whether the change rate α1 of the commanded pressure AS is equal to or greater than a predetermined change rate determination value for the commanded pressure AS. This change rate determination value is stored in advance in the storage unit 71. In the determination of step S120, the determination unit 76 refers to the temporal change for state determination stored in the storage unit 71. And the determination unit 76 calculates, as the change rate α1 of the commanded pressure AS, an average value of the change rate of the commanded pressure AS per unit time during the period in which the commanded pressure AS continues to increase after the commanded pressure AS starts to increase. Then, the determination unit 76 refers to the change rate determination value for the commanded pressure AS stored in the storage unit 71, and compares the calculated change rate α1 with the change rate determination value for the commanded pressure AS. As mentioned above, an abnormality related to its operation may occur in the valve bodies 22a and 24a of the service solenoid valve 20. The change rate determination value for the commanded pressure AS is determined by experiments or the like as a lower limit value of the change rate α1 when the service solenoid valve 20 is operating normally without any abnormality.

When the determination unit 76 determines that the calculated change rate α1 is less than the change rate determination value for the commanded pressure AS (step S120: NO), it proceeds to step S210 and subsequent step S300. Whereas when the determination unit 76 determines that the calculated change rate α1 is equal to or higher than the change rate determination value for the commanded pressure AS (step S120: YES), the determination unit 76 proceeds to step S130. Then, in step S130, the determination unit 76 determines that the service solenoid valve 20 operates normally. Thereafter the determination unit 76 proceeds to step S140.

In step S140, the determination unit 76 determines whether the response time h2 of the output pressure BS is equal to or less than a predetermined response time determination value for the output pressure BS. This response time determination value is stored in the storage unit 71. In the determination in step S140, the determination unit 76 refers to the temporal change for state determination stored in the storage unit 71, and calculates the response time h2 from when the commanded pressure AS starts to increase to when the output pressure BS starts to increase, which is the period elapsed from the timing t1 at which the commanded pressure AS starts to increase to the timing t2 at which the output pressure BS starts to increase. Then, the determination unit 76 refers to the response time determination value for the output pressure BS stored in the storage unit 71, and compares the calculated response time h2 with the stored response time determination value for the output pressure BS. As for the hollow shaft 46 and the valve body 40 in the relay valve 30, an abnormality related to their operation such as an increase in sliding resistance caused by foreign substances sticking therearound may occur. The response time determination value for the output pressure BS is determined by experiments or the like as an upper limit value of the response time h2 when the relay valve 30 is operating normally without such an abnormality.

When the determination unit 76 determines that the calculated response time h2 is larger than the response time determination value for the output pressure BS (step S140: NO), the determination unit 76 proceeds to step S220. In step S220, the determination unit 76 determines that the relay valve 30 has an abnormality. Then, the determination unit 76 turns on the second abnormality notification lamp 156 in the driver's cab 150. Subsequently, the determination unit 76 proceeds to step S300.

Whereas when the determination unit 76 determines in step S140 that the calculated response time h2 is equal to or less than the response time determination value for the output pressure BS (step S140: YES), the determination unit 76 proceeds to step S150. In step S150, the determination unit 76 determines whether the change rate α2 of the output pressure BS is equal to or greater than a predetermined change rate determination value for the output pressure BS. This change rate determination value is stored in advance in the storage unit 71. In the determination of step S150, the determination unit 76 refers to the temporal change for state determination stored in the storage unit 71. And the determination unit 76 calculates, as the change rate α2 of the output pressure BS, an average value of the change rate of the output pressure BS per unit time during the period in which the output pressure BS continues to increase after the output pressure BS started to increase. Then, the determination unit 76 refers to the change rate determination value for the output pressure BS stored in the storage unit 71, and compares the calculated change rate α2 with the change rate determination value for the output pressure BS. As mentioned above, an abnormality related to its operation may occur in the hollow shaft 46 and the valve body 40 of the relay valve 30. The change rate determination value for the output pressure BS is determined by experiments or the like as a lower limit value of the change rate α2 when the relay valve 30 is operating normally without any abnormality.

When the determination unit 76 determines that the calculated change rate α2 is less than the change rate determination value for the output pressure BS (step S150: NO), it proceeds to step S220 and subsequent step S300. Whereas when the determination unit 76 determines that the calculated change rate α2 is equal to or higher than the change rate determination value for the output pressure BS (step S150: YES), the determination unit 76 proceeds to step S160.

In step S160, the determination unit 76 calculates the pressure difference Z obtained by subtracting the commanded pressure AS from the output pressure BS after both the commanded pressure AS and the output pressure BS have been increased and reached a plateau. Subsequently, the determination unit 76 determines whether the pressure difference Z is decreased as time proceeds, that is, whether the temporal amount of change in the pressure difference Z is zero or not. Specifically, the determination unit 76 refers to the temporal change for state determination stored in the storage unit 71. Then, the determination unit 76 calculates the pressure difference Z obtained by subtracting the commanded pressure AS from the output pressure BS for a prescribed time period after both the commanded pressure AS and the output pressure BS have reached a plateau. The determination unit 76 calculates a regression line representing the trend of change of the pressure difference Z over time, and determines whether a slope of the regression line is negative. Note that when the change rate determination value for the commanded pressure AS is set as a specified value, for example, the change rate of the output pressure BS per unit time becomes less than the specified value from the state where the output pressure BS is increasing according to the rise of the commanded pressure AS in the above-mentioned given period since the increase of both the commanded pressure AS and the output pressure BS have been finished before the above-mentioned prescribed time period. Further, the change rate of the commanded pressure AS per unit time and the change rate of the output pressure BS per unit time continue to be below the specified value in the prescribed time period.

As will be described in detail later, when the relay valve 30 normally operates, the hollow shaft 46 comes into contact with the valve body 40 during the period after the rises of both the commanded pressure AS and the output pressure BS are completed, thus the communication between the output chamber 34 and the discharge chamber 38 is shut off. That is, the pressure difference Z is maintained at zero, and the slope of the regression line becomes zero. Further, when the relay valve 30 operates normally, even if a slight fluctuation of the commanded pressure AS occurs during the period after the rises of both the commanded pressure AS and the output pressure BS are completed, the hollow shaft 46 moves together with the diaphragm 35 in the relay valve 30 so as to eliminate a pressure difference between the control chamber 36 and the output chamber 34, so that the output pressure BS increases or decreases following the commanded pressure AS. Consequently, the pressure difference Z is maintained at zero. That is, when the relay valve 30 normally operates, the slope of the regression line becomes zero. Whereas when the diaphragm 35 is deformed such that it bends toward the control chamber 36 due to a malfunction of the valve body 40 or the hollow shaft 46 caused by aged deterioration or the like as shown by the alternate long and short dash line in Fig. 1, the hollow shaft 46 is disposed at a position away from the valve body 40 during the period after both the commanded pressure AS and the output pressure BS reach a plateau. Accordingly, the output chamber 34 and the discharge chamber 38 are communicated with each other via the hollow shaft 46, and the pressure difference Z decreases overtime. In this case, the slope of the regression line is negative.

When the determination unit 76 determines that the slope of the calculated regression line is negative (step S160: NO), that is, when the temporal amount of change in the pressure difference Z is smaller than zero, it proceeds to step S230. In step S230, the determination unit 76 determines that the relay valve 30 has an abnormality. Then, the determination unit 76 turns on the third abnormality notification lamp 158 in the driver's cab 150. Subsequently, the determination unit 76 proceeds to step S300.

Whereas when the determination unit 76 determines that the slope of the calculated regression line is zero (step S160: YES), that is, when the temporal amount of change in the pressure difference Z is zero, it proceeds to step S170. Then, in step S170, the determination unit 76 determines that the relay valve 30 operates normally. The determination unit 76 ends the series of steps thereafter. The steps other than step S300 in the state determination process correspond to the determination process.

As operation in the embodiment, the temporal amount changes in the commanded pressure AS and the output pressure BS when the control unit 72 executed the braking process will be now described together with the operations of the service solenoid valve 20 and the relay valve 30.

When the control unit 72 switches the opening-closing command signal G to the pressure increase mode signal in response to the brake command signal BRK caused by a brake operation, the valve body 22a of the supply solenoid valve 22 in the service solenoid valve 20 is moved to open from the closed state. At this time, when the service solenoid valve 20 switches from the pressure maintain mode to the pressure increase mode, the valve body 24a of the discharge solenoid valve 24 is not moved and remains closed. Whereas when the service solenoid valve 20 switches from the pressure decrease mode to the pressure increase mode, the valve body 24a of the discharge solenoid valve 24 is moved to close from the open state. As described above, when the opening-closing command signal G is switched to the pressure increase mode signal, the valve bodies 22a and 24a are moved. The commanded pressure AS increases as a result of such movements of each of the valve bodies 22a and 24a. When the control unit 72 switches the opening-closing command signal G to the pressure maintain mode signal in response to the commanded pressure AS reaching the target value, the valve body 22a of the supply solenoid valve 22 in the service solenoid valve 20 is moved to close from the open state. After that, the commanded pressure AS is maintained constant.

Once the service solenoid valve 20 is switched to the pressure increase mode and the commanded pressure AS increases, the pressure in the control chamber 36 becomes larger than the pressure in the output chamber 34 in the relay valve 30. Consequently, the diaphragm 35 that separates the control chamber 36 and the output chamber 34 bends toward the output chamber 34. Thus, the valve body 40 moves together with the hollow shaft 46 to open the communication hole H, which increases the pressure in the output chamber 34, that is, the output pressure BS. When the pressure in the output chamber 34 becomes equal to the pressure in the control chamber 36 while the service solenoid valve 20 is switched to the pressure main mode and the commanded pressure AS is maintained constant, the bending of the diaphragm 35 is eliminated. Accordingly, the hollow shaft 46 is moved and the valve body 40 returns to the position where it closes the communication hole H. At this time, the hollow shaft 46 contacts the valve body 40, so that the pressure in the output chamber 34, that is, the output pressure BS is held constant.

Advantageous effects of the second embodiment will be now described.

(1) As for the valve bodies 22a and 24a in the service solenoid valve 20, their sliding resistance may be increase when foreign matter stuck between respective mating objects that slidably supports them. When the sliding resistance of the valve bodies 22a and 24a increases and the valve bodies 22a and 24a become difficult to move, the response time h1 of the commanded pressure AS to the opening-closing command signal G becomes slower as shown by the alternate long and short dash line in the graph (a) in Fig. 2. Further, the change rate α1 of the commanded pressure AS after the commanded pressure AS starts to change becomes smaller. In the above configuration, it is determined whether the response time h1 of the commanded pressure AS to the opening-closing command signal G is equal to or less than the response time determination value for the commanded pressure AS, and the determination result is notified. The driver can easily know the deterioration of the responsiveness of the service solenoid valve 20 by the notification. Further, in the above configuration, it is determined whether the change rate α1 of the commanded pressure AS is equal to or higher than the change rate determination value for the commanded pressure AS, and the determination result is notified. The driver can easily know the deterioration of the moving speed of the service solenoid valve 20 by the notification. There may be various abnormalities related to the service solenoid valve 20, it is possible to specify abnormalities such as the deterioration of responsiveness and moving speed, which contributes to identification of the cause of the abnormality occurred in the service solenoid valve 20 such as the increase in sliding resistance of the valve bodies 22a and 24a.

Abnormality of the response time h1 and the change rate α1 of the commanded pressure AS may be caused by factors other than the increase in the sliding resistance. For example, foreign substance may accumulate at some point in the first branch passage 12a of the first connection passage 12, and flow of the compressed air to the service solenoid valve 20 may be disrupted. Even in such a case, it is detected as an abnormality in the service solenoid valve 20.

Similarly to the valve bodies 22a and 24a of the service solenoid valve 20, sliding resistances of the hollow shaft 46 and the valve body 40 of the relay valve 30 may also increase due to foreign substance and the like stuck therearound. This causes the response time h2 of the output pressure BS to the change of the commanded pressure AS to be slow, or the change rate α2 of the output pressure BS becomes small as shown by the alternate long and short dash line in the graph (b) in Fig. 2. In the above configuration, since the determination results regarding the response time h2 and the change rate α2 of the output pressure BS are also notified, so that the driver can easily know the deterioration of the responsiveness and the moving speed of the relay valve 30. There may be various abnormalities related to the relay valve 30, it is possible to specify abnormalities such as the deterioration of responsiveness and moving speed, which contributes to identification of the cause of the abnormality occurred in the relay valve 30 such as the increase in sliding resistance of the hollow shaft 46 and the valve body 40. Abnormality of the response time h2 and the change rate α2 of the output pressure BS may be caused by factors other than the increase in the sliding resistance. For example, foreign substance may accumulate at some point in the second branch passage 12b of the first connection passage 12, and flow of the compressed air to the relay valve 30 may be disrupted.

(2) After both the commanded pressure AS and the output pressure BS reached a plateau, the hollow shaft 46 may be situated at a position away from the valve body 40 due to a malfunction of the valve body 40 or the hollow shaft 46 caused by aged deterioration or the like, which may cause the output chamber 34 to communicate with the discharge chamber 38 via the hollow shaft 46. In this case, air leakage from the output chamber 34 may occur. In this case, the output pressure BS gradually decreases after both the commanded pressure AS and the output pressure BS reach a plateau as shown by the alternate long and short dash line in the graph (b) of Fig. 2. The pressure difference Z obtained by subtracting the commanded pressure AS from the output pressure BS increases in the negative direction as the time progresses. In the above configuration, it is determined whether the slope of the regression line, which indicates the temporal change tendency of the pressure difference Z obtained by subtracting the commanded pressure AS from the output pressure BS, is negative, and the determination result is notified. In this way, the driver can easily know the air leak in the relay valve 30. It is advantageous to able to specify the abnormality as the air leak from among various possible abnormalities related to the relay valve 30 since it contributes to the identification of the cause of the abnormality occurred to the relay valve 30, that is, the malfunction of the valve body 40 or the hollow shaft 46.

An abnormality of the temporal change tendency of the difference between the output pressure BS and the commanded pressure AS may be caused by a factor other than malfunction of the valve body 40 or the hollow shaft 46. For example, the connection of the third connection passage 16 to a connecting port of the output chamber 34 may become loose and a gap may be formed between the connecting port of the output chamber 34 and the third connection passage 16, resulting in air leak from the gap. Even in such a case, it is detected as an abnormality, that is the air leak, in the relay valve 30.

(3) When it is determined that an abnormality has occurred in the service solenoid valve 20 or the relay valve 30, the railway vehicle is braked. In this way, the states of the service solenoid valve 20 and the relay valve 30 can be immediately reflected to the control of the brake of the railway vehicle.

The above embodiment can be modified as described below. The above embodiment and the following modifications can be implemented in combination to the extent where they are technically consistent with each other.
- Regarding the first abnormality notification lamp 154 that notifies an abnormality of the service solenoid valve 20, two separate abnormality notification lamps may be provided in the driver's cab 150. Specifically, one abnormality notification lamp is turned on when it is determined that the service solenoid valve 20 operates abnormally as the response time h1 of the commanded pressure AS is larger than the response time determination value, and the other abnormality notification lamp is turned on when it is determined that the service solenoid valve 20 operates abnormally as the change rate α1 of the commanded pressure AS is smaller than the change rate determination value. Depending on the type of abnormality that occurs in the service solenoid valve 20, the response time h1 may be significantly affected or the change rate α1 may be significantly affected. Therefore, it is preferable to provide dedicated abnormality notification lamps as described above in order to identify the cause of the abnormality.
- Similarly to the above modification example, regarding the second abnormality notification lamp 156 that notifies an abnormality of the relay valve 30, two separate abnormality notification lamps may be provided in the driver's cab 150. Specifically, one abnormality notification lamp is turned on when it is determined that the relay valve 30 operates abnormally as the response time h2 of the output pressure BS is larger than the response time determination value, and the other abnormality notification lamp is turned on when it is determined that the relay valve 30 operates abnormally as the change rate α2 of the output pressure BS is smaller than the change rate determination value.
- The state determination result of the service solenoid valve 20 and the state determination result of the relay valve 30 may be stored in the storage unit 71 of the brake control device 70. Further, the storage unit 71 may store determination results of indexes used for determining the state of the service solenoid valve 20, such as the response time h1 and the change rate α1 of the commanded pressure AS. The same applies to the relay valve 30. By storing determination results in the storage unit 71, it is possible to read out the determination results at the time of inspection of the railway vehicle or the like and to know whether repair is necessary.
- The response time determination value for the commanded pressure AS may be changed depending on conditions instead of maintaining constant. For example, when the outside air temperature is low, the viscosity of grease used for increasing the slidability of the valve bodies 22a and 24a in the service solenoid valve 20 becomes high compared to when the outside air temperature is high, which may reduce the smoothness of the movement of the valve bodies 22a, 24a. The response time determination value for the commanded pressure AS may be determined in consideration of such temperature dependence regarding the operation of the valve bodies 22a and 24a. More specifically, the lower the outside air temperature, the longer the response time determination value for the commanded pressure AS may be set.
- As another example of changing the response time determination value for the commanded pressure AS depending on conditions instead of maintaining constant, the response time determination value for the commanded pressure AS may be set in consideration of the degree of age deterioration of the service solenoid valve 20. As for the valve bodies 22a and 24a of the service solenoid valve 20, the longer the period of use from the new state, the more difficult the valve bodies 22a and 24a may smoothly move. The response time determination value for the commanded pressure AS may be set longer as the period of use is longer in consideration of the age deterioration of the valve bodies 22a and 24a. When the response time determination value for the commanded pressure AS is set in consideration of the degree of age deterioration related to the operation of each valve body 22a, 24a, it is possible to discern the cause of the operation abnormality, more specifically, caused by foreign substances stuck therearound or caused by the deterioration of operability due to aging.
- Similarly to the above modification example, the change rate determination value for the commanded pressure AS, the response time determination value for the output pressure BS, and the change rate determination value for the output pressure BS may not be constant values but values that can be changed depending on the conditions.
- In a railway vehicle, the plurality of brakes 19 and pressure regulators 100 are provided. Therefore, the response time determination value for the commanded pressure AS may be set based on the response times h1 of the plurality of pressure regulators 100 mounted on the same railway vehicle. For example, the acquisition unit 74 may acquire the temporal changes for state determination for the plurality of pressure regulators 100, and may store the data of the temporal changes for state determination in the storage unit 71. The determination unit 76 may calculate the response times h1 of the plurality of pressure regulators 100 in a certain period in the past based on the past data of the temporal changes for state determination for the plurality of pressure regulators 100. For example, the determination unit 76 calculates the response time h1 based on the temporal change for state determination in the past single day for each of the plurality of pressure regulators 100. The determination unit 76 may use, for example, 150% of the calculated average value of the plurality of response times h1 as the response time determination value for the commanded pressure AS. The determination unit 76 may determine the state of the service solenoid valve 20 based on the response time determination value obtained as described above. As described above, the response time determination value for the commanded pressure AS is calculated based on the response times h1 of the plurality of pressure regulators 100 and the state of the service solenoid valve 20 is determined. This means that the state of the service solenoid valve 20 is determined based on the comparison of the commanded pressures AS in the plurality of service solenoid valves 20 during the determination period. Here, it is assumed that the plurality of pressure regulators 100 mounted on the same railway vehicle have the same degree of age deterioration as they were initially installed unused new ones. By calculating the response time determination value using the regulators having a similar degree of age deterioration, the state(s) of the pressure regulator(s) 100 can be determined separately from the degree of age deterioration.
- Regarding setting the response time determination value for the commanded pressure AS based on the response times h1 of the plurality of pressure regulators 100 as described in the above modification example, the response time h1 for each temporal change for state determination may be calculated in advance and stored in the storage unit 71 for each of the plurality of pressure regulators 100. The determination unit 76 may read such data and calculate the response time determination value for the commanded pressure AS.
- Regarding setting the response time determination value for the commanded pressure AS based on the response times h1 of the plurality of pressure regulators 100 as described in the above modification example, the response time determination value for the commanded pressure AS may be set based on the data in the past week or the past month, for example. Alternatively, the response time determination value for the commanded pressure AS may be set based on the response times h1 for the plurality of pressure regulators 100 in response to the latest single brake command signal BRK.
- Regarding setting the response time determination value for the commanded pressure AS based on the response times h1 for the plurality of pressure regulators 100 as described in the above modification example, the response times h1 of all of the pressure regulators 100 mounted in the railway vehicle may not be used for calculating the response time determination value but only those satisfying a condition may be selected to calculate the response time determination value. For example, the response times h1 of the plurality of pressure regulators 100 may be sorted in order from the shortest one, several response times in higher ranks may be selected, and the response time determination value may be determined as an average value of the selected ones. Further, the pressure regulators 100 used for setting the response time determination value may be selected based on the arrangement of the pressure regulators 100, for example, only the response times h1 for the adjacent pressure regulators 100 may be used.
- Similarly to the above modification example, the change rate determination value for the commanded pressure AS, the response time determination value for the output pressure BS, and the change rate determination value for the output pressure BS are may be set based on information about the plurality of pressure regulators 100 in the same railway vehicle. For example, the response time determination value for the output pressure BS may be calculated based on the response times h2 of the plurality of pressure regulators 100 and the state of the relay valve 30 is determined. This means that the state of the relay valve 30 is determined based on the comparison of the output pressures BS in the plurality of relay valves 30 during the determination period.
- The temporal change tendency of the difference between the output pressure BS and the commanded pressure AS after both the commanded pressure AS and the output pressure BS reach a plateau may reflect an abnormality of the service solenoid valve 20. After the commanded pressure AS and the output pressure BS reach a plateau, the commanded pressure AS should be constant while the service solenoid valve 20 remains in the pressure maintain mode. Therefore, if there is a considerable increase or decrease in the temporal change tendency of the commanded pressure AS after the commanded pressure AS reaches a plateau, it means that the service solenoid valve 20 has an abnormality. For example, in the discharge solenoid valve 24 of the service solenoid valve 20, the tightness of the valve body 24a to close the passage may be loose, the discharge solenoid valve 24 may be unintentionally opened, and the compressed air may leak from the service solenoid valve 20. As a result, the commanded pressure AS may decrease. Due to such an abnormality of the service solenoid valve 20, the regression line of the pressure difference Z may become positive, for example.
- Instead of or in addition to the indexes such as the response time h1 and the change rate α1 for determining an abnormality related to the service solenoid valve 20 adopted in the above embodiment, other index(es) may be used to determine the abnormality of the service solenoid valve 20. An example of the index includes the time dependent change tendency of the commanded pressure AS after the commanded pressure AS reaches a plateau. As described above, after the commanded pressure AS reaches a plateau, the commanded pressure AS should be constant while the service solenoid valve 20 remains in the pressure maintain mode. Therefore, if there is a considerable increase or decrease in the temporal change tendency of the commanded pressure AS after the commanded pressure AS reaches a plateau, it can be determined that the service solenoid valve 20 has an abnormality.
- Instead of or in addition to the indexes such as the response time h2, the change rate α2, and the temporal change tendency of the difference between the output pressure BS and the commanded pressure AS for determining an abnormality related to the relay valve 30 adopted in the above embodiment, other index(es) may be used to determine the abnormality of the relay valve 30. An example of the index includes a value of the output pressure BS at the time when the output pressure BS reaches a plateau. If this value is not a value that the output pressure BS should take depending on the commanded pressure AS, it can be determined that an abnormality has occurred in the relay valve 30. As a cause of such an abnormality, a malfunction of the valve body 40 or the hollow shaft 46 is considered. Specifically, if a malfunction occurs in the valve body 40 or the hollow shaft 46 when there is no pressure difference between the output chamber 34 and the control chamber 36, the hollow shaft 46 pushes the valve body 40 toward the input chamber 32 and the communication hole H is opened even when there is no pressure difference between the output chamber 34 and the control chamber 36. In this case, the pressure in the output chamber 34 becomes higher than the pressure in the control chamber 36. For this reason, the value of the output pressure BS at the time when the output pressure BS reaches a plateau may become higher than the original value.
- Regarding the determination of the state of the service solenoid valve 20, either the determination of an abnormality based on the response time h1 or the determination of an abnormality based on the change rate α1 may be omitted. The same applies to the relay valve 30 in this respect. Further, regarding the determination of the state of the relay valve 30, the determination of an abnormality based on the temporal change tendency of a difference between the output pressure BS and the commanded pressure AS may be omitted.
- Determination of the state of the service solenoid valve 20 or the relay valve 30 may be omitted.
- When the state determination of the service solenoid valve 20 is omitted, as long as the information of the opening-closing command signal G and the output pressure BS are included in the temporal change for state determination, the information of the commanded pressure AS is not essential.
- When the state determination of the relay valve 30 is omitted, as long as the information of the opening-closing command signal G and the commanded pressure AS are included in the temporal change for state determination, the information of the output pressure BS is not essential.
- In the above embodiment, the states of the service solenoid valve 20 and the relay valve 30 are determined based on changes when the commanded pressure AS and the output pressure BS increase. However, it is also possible to determine the state of the service solenoid valve 20 and the relay valve 30 based on changes when the commanded pressure AS and the output pressure BS decrease. Specifically, when the opening-closing command signal G is switched to the pressure decrease mode signal in response to the brake command signal BRK from the operating lever 152 in the driver's cab 150, the control unit 72 first calculates a target value of the commanded pressure AS and controls the service solenoid valve 20 such that it operates in the pressure decrease mode. The control unit 72 controls the service solenoid valve 20 such that it operates in the pressure maintain mode when the commanded pressure AS reaches the target value. Through such process, the commanded pressure AS is maintained constant after dropping to the target value. The output pressure BS changes following the commanded pressure AS. This temporal change is a change with time of the commanded pressure AS and the output pressure BS caused by input of the opening-closing command signal G for the pressure decrease mode to the service solenoid valve 20 in response to the brake command signal BRK.

The determination unit 76 determines the states of the service solenoid valve 20 and the relay valve 30 based on the above-described temporal changes in the commanded pressure AS and the output pressure BS. Specifically, the determination unit 76 determines the state of the service solenoid valve 20 based on a response time from when the opening-closing command signal G is switched to the pressure decrease mode signal and to when the commanded pressure AS starts to drop. Further, the determination unit 76 determines the state of the service solenoid valve 20 based on a change rate of the commanded pressure AS after the commanded pressure AS starts to drop. Further, the determination unit 76 determines an abnormality of the relay valve 30 based on a response time from when the commanded pressure AS starts to decrease to when the output pressure BS starts to decrease. Further, the determination unit 76 determines the state of the relay valve 30 based on a change rate of the output pressure BS after the output pressure BS starts to decrease. Further, the determination unit 76 determines the state of the relay valve 30 based on a difference between the commanded pressure AS and the output pressure BS after both the commanded pressure AS and the output pressure BS finish to decrease. When determining the states of the service solenoid valve 20 and the relay valve 30 in this way, a determination period spans from when the opening-closing command signal G is switched to the pressure decrease mode signal to when the output pressure BS is maintained constant for a certain period of time after the decrease of the output pressure BS finishes. The states of the service solenoid valve 20 and the relay valve 30 are determined based on the commanded pressure AS and the output pressure BS during the determination period after the opening-closing command signal G is switched to the pressure decrease mode signal.
- As long as the temporal changes of the commanded pressure AS and the output pressure BS during the period required to determine the states of the service solenoid valve 20 and the relay valve 30 are stored, temporal changes in other periods may be or may not be stored. For example, the acquisition unit 74 may store temporal changes of the commanded pressure AS and the output pressure BS in the storage unit 71 over the entire period while the railway vehicle travels. In this case, the acquisition unit 74 may acquire information regarding change of the opening-closing command signal G in accordance with the brake command signal BRK and store the information in the storage unit 71. As long as the information is acquired, the determination unit 76 can know the period during which the braking process is performed while the railway vehicle is running, and can calculate the response time h1 of the commanded pressure AS and the like. That is, the acquisition unit 74 may acquire the opening-closing command signal G overtime and store it in the storage unit 71 as the temporal change.
- The acquisition unit 74 may delete data older than a certain period on the storage unit 71 when storing new data regarding the commanded pressure AS and the output pressure BS in the storage unit 71. That is, the acquisition unit 74 may store the temporal change in a certain time width in the storage unit 71 by overwriting old data with new data.
- It is not essential to operate the brake of the railway vehicle when the determination unit 76 determines that the service solenoid valve 20 or the relay valve 30 has an abnormality. As mentioned above, the plurality of brakes 19 and pressure regulators 100 are provided in the railway vehicle. When an abnormality is found in any of the plurality of pressure regulator 100, the control of the pressure regulator 100 in which the abnormality occurs is stopped and only the pressure regulators 100 operating normally are controlled to put the brake 19 on the railway vehicle when necessary.
- Rather than determining the states of the service solenoid valve 20 and the relay valve 30 while the railway vehicle normally operates, temporal changes of the commanded pressure AS and output pressure BS may be obtained when the braking process is performed while the railway vehicle is stopped to be inspected. The states of the service solenoid valve 20 and the relay valve 30 may be determined based on the obtained temporal changes of the commanded pressure AS and the output pressure BS.
- The configurations of the service solenoid valve 20 and the relay valve 30 in the above embodiment are merely examples and can be modified as appropriate.
- The brake control device 70 and the state determination device of the pressure regulator 100 may be provided separately. In this case, the brake control device 70 has the control unit 72. The state determination device of the pressure regulator 100 includes the acquisition unit 74 and the determination unit 76.
- Instead of mounting the state determination device of the pressure regulator 100 on the railway vehicle, the state determination device may be provided on a server or a computer outside the railway vehicle. A signal related to the commanded pressure AS detected by the commanded pressure detection sensor 90 and a signal related to the output pressure BS detected by the output pressure detection sensor 92 may be transmitted to the state determination device of the pressure regulator 100 over an external communication network to determine the states of the service solenoid valve 20 and the relay valve 30.
- The temporal changes of the commanded pressure AS and the output pressure BS may be stored and then the states of the service solenoid valve 20 and the relay valve 30 may be determined later. When the state determination device of the pressure regulator 100 is not mounted on the railway vehicle as in the above modification example, the storage unit 71 of the brake control device 70 may store the temporal changes of the commanded pressure AS and the output pressure BS, for example, the stored data may be read out and input to or transmitted to the state determination device of the pressure regulator 100 outside the railway vehicle.
- As for the temporal changes of the commanded pressure AS and the output pressure BS when the opening-closing command signal G is supplied to the service solenoid valve 20 in response to the brake command signal BRK, the state of the pressure regulator 100 may be determined based on values of the commanded pressure AS and the output pressure BS themselves, not the timing or rate of the change.
- As for the state determination of the relay valve 30, the timing at which the output pressure BS starts to change and the change rate of the output pressure BS may be determined based on the timing at which the opening-closing command signal G is supplied to the service solenoid valve 20. For example, the state of the relay valve 30 may be determined based on the response time, which is from when the opening-closing command signal G is switched to the pressure increase mode signal to when the output pressure BS starts to change.
- The timing to start the determination period is not limited to the timing of the above embodiment. The timing to start the determination period may be the timing at which the commanded pressure AS starts to change.
- The timing to end the determination period is not limited to the timing of the above embodiment. For example, if the state determination of the relay valve 30 is not performed, that is, if the output pressure BS is not used for the state determination, the timing to end the determination period may be when the commanded pressure AS is maintained constant and a certain time is elapsed after the commanded pressure AS increased and reached a plateau.
- The timing to perform the state determination of the service solenoid valve 20 and the relay valve 30 does not have to be immediately after the control unit 72 executes the braking process and the acquisition unit 74 acquires the temporal changes for the state determination. If data needed for the state determination of the service solenoid valve 20 and the relay valve 30 is stored in advance, the state determinations can be performed at any time.
- Note that the state determination device for the relay valve of the railway vehicle according to the embodiments of the present invention may be configured to include the acquisition unit that acquires the commanded pressure input to the relay valve and the output pressure output from the relay valve, and the determination unit that determines the state of the relay valve based on the commanded pressure and the output pressure. With this configuration, the state of the relay valve can be determined without disassembling the relay valve to inspect the inside or checking the actual movement of the mechanism in the relay valve.

The present invention encompasses the following embodiments.

### <Additional Embodiment 1>

A device for a railway vehicle equipped with a relay valve and a service solenoid valve, comprising:
an acquisition unit acquiring an output pressure of the relay valve that amplifies a flow of air supplied thereto to output the amplified flow of air to a brake cylinder, the output pressure being as large as a commanded pressure generated by the service solenoid valve in accordance with a command signal, and the acquisition unit also acquiring at least one of the command signal and the commanded pressure; and
a determination unit determining a state of the relay valve based on the output pressure in a determination period after at least one of the command signal and the commanded pressure changes.

### <Additional Embodiment 2>

The device of Additional Embodiment 1, wherein the determination unit determines the state of the relay valve based on at least one of a timing at which the output pressure starts to change in accordance with a change of at least one of the command signal and the commanded pressure, and a change rate of the output pressure that changes in accordance with a change of at least one of the command signal and the commanded pressure.

### <Additional Embodiment 3>

The device of Additional Embodiment 1 or 2, wherein when a change rate of the output pressure per unit time from a state where the output pressure changes in accordance with a change of the commanded pressure becomes less than a predetermined value and a change rate of the commanded pressure and the change rate of the output pressure continue to be less than predetermined values for a certain period of time, the determination unit determines the state of the relay valve based on a trend of change of a difference between the commanded pressure and the output pressure during the period of time.

### <Additional Embodiment 4>

The device of any one of Additional Embodiments 1 to 3, wherein
the relay valve is one of a plurality of relay valves provided in the railway vehicle,
the acquisition unit acquires the output pressure during the determination period for the plurality of relay valves in the railway vehicle, and
the determination unit determines the state of the relay valve based on comparison of the output pressures of the plurality of relay valves during the determination period.

### <Additional Embodiment 5>

The device of any one of Additional Embodiments 1 to 4, further comprising a control unit controlling a brake of the railway vehicle based on a result of the determination by the determination unit.

### <Additional Embodiment 6>

A device for a railway vehicle equipped with a relay valve and a service solenoid valve, comprising:
an acquisition unit acquiring a commanded pressure of the service solenoid valve and a command signal, the service solenoid valve generating, in accordance with the command signal, the commanded pressure that defines an output pressure of the relay valve, and the relay valve amplifying a flow of air supplied thereto to output the amplified flow of air to a brake cylinder; and
a determination unit determining a state of the service solenoid valve based on the commanded pressure during a determination period after the command signal changes.

### <Additional Embodiment 7>

The device of Additional Embodiment 6, wherein the determination unit determines the state of the service solenoid valve based on at least one of a timing at which the commanded pressure starts to change in accordance with a change of the command signal, and a change rate of the commanded pressure that changes in accordance with a change of the command signal.

### <Additional Embodiment 8>

The device of Additional Embodiment 6 or 7, wherein
the service solenoid valve is one of a plurality of service solenoid valves provided in the railway vehicle,
the acquisition unit acquires the commanded pressure during the determination period for the plurality of service solenoid valves in the railway vehicle, and
the determination unit determines the state of the service solenoid valve based on comparison of the commanded pressures of the plurality of service solenoid valves during the determination period.

### <Additional Embodiment 9>

The device of any one of Additional Embodiments 6 to 8, further comprising a control unit controlling a brake of the railway vehicle based on a result of the determination by the determination unit.

### <Additional Embodiment 10>

A program for a railway vehicle equipped with a relay valve and a service solenoid valve, wherein the program causes a computer to perform the steps of:
acquiring an output pressure of the relay valve that amplifies a flow of air supplied thereto to output the amplified flow of air to a brake cylinder, the output pressure being as large as a commanded pressure generated by the service solenoid valve in accordance with a command signal, and the acquisition unit also acquiring at least one of the command signal and the commanded pressure; and
determining a state of the relay valve based on the output pressure in a determination period after at least one of the command signal and the commanded pressure changes.

### <Additional Embodiment 11 >

A program for a railway vehicle equipped with a relay valve and a service solenoid valve, wherein the program causes a computer to perform the steps of:
acquiring a commanded pressure of the service solenoid valve and a command signal, the service solenoid valve generating, in accordance with the command signal, the commanded pressure that defines an output pressure of the relay valve, and the relay valve amplifying a flow of air supplied thereto to output the amplified flow of air to a brake cylinder; and
determining a state of the service solenoid valve based on the commanded pressure during a determination period after the command signal changes.

### <Additional Embodiment 12>

A computer-readable storage medium storing the program of Additional Embodiment 10 or 11.

The present examples and embodiments are to be considered as illustrative and not restrictive, and the invention is not to be limited to the details given herein, but may be modified within the scope and equivalence of the appended claims.

## Claims

1. A state determination device for a relay valve of a railway vehicle, comprising:
an acquisition unit (74) acquiring an output pressure (BS) of a relay valve (30) that amplifies a flow of air supplied thereto to output the amplified flow of air to a brake cylinder (18), the output pressure (BS) being as large as a commanded pressure (AS) which a service solenoid valve (20) generates in accordance with a command signal (G), the acquisition unit (74) also acquiring at least one of the command signal (G) and the commanded pressure (AS); and
a determination unit (76) determining a state of the relay valve (30) based on the output pressure (BS) in a determination period after at least one of the command signal (G) and the commanded pressure (AS) changes.

2. A state determination device for a relay valve of a railway vehicle according to claim 1, wherein the determination unit (76) determines the state of the relay valve (30) based on at least one of a timing at which the output pressure (BS) starts to change in accordance with a change of at least one of the command signal (G) and the commanded pressure (AS), and a change rate (α2) of the output pressure (BS) that changes in accordance with a change of at least one of the command signal (G) and the commanded pressure (AS).

3. A state determination device for a relay valve of a railway vehicle according to claim 1 or 2, wherein when a change rate (α2) of the output pressure (BS) per unit time from a state where the output pressure (BS) changes in accordance with a change of the commanded pressure (AS) becomes less than a predetermined value and a change rate (α1) of the commanded pressure (AS) and the change rate (α2) of the output pressure (BS) continue to be less than predetermined values for a certain period of time, the determination unit (76) determines the state of the relay valve (30) based on a trend of change of a difference between the commanded pressure (AS) and the output pressure (BS) during the period of time.

4. A state determination device for a relay valve of a railway vehicle according to any one of claims 1 to 3, wherein
the relay valve (30) is one of a plurality of relay valves (30) provided in a railway vehicle,
the acquisition unit (74) acquires the output pressure (BS) during the determination period for the plurality of relay valves (30) in the railway vehicle, and
the determination unit (76) determines the state of the relay valve (30) based on comparison of the output pressures (BS) of the plurality of relay valves (30) during the determination period.

5. A state determination device for a service solenoid valve of a railway vehicle, comprising:
an acquisition unit (74) acquiring a commanded pressure (AS) of a service solenoid valve (20) and a command signal (G), the service solenoid valve (20) generating, in accordance with the command signal (G), the commanded pressure (AS) that defines an output pressure (BS) of a relay valve (30), and the relay valve (30) amplifying a flow of air supplied thereto to output the amplified flow of air to a brake cylinder (18); and
a determination unit (76) determining a state of the service solenoid valve (20) based on the commanded pressure (AS) during a determination period after the command signal (G) changes.

6. A state determination device for a service solenoid valve of a railway vehicle according to claim 5, wherein the determination unit (76) determines the state of the service solenoid valve (20) based on at least one of a timing at which the commanded pressure (AS) starts to change in accordance with a change of the command signal (G), and a change rate of the commanded pressure (AS) that changes in accordance with a change of the command signal (G).

7. A state determination device for a service solenoid valve of a railway vehicle according to claim 5 or 6, wherein
the service solenoid valve (20) is one of a plurality of service solenoid valves (20) provided in a railway vehicle,
the acquisition unit (74) acquires the commanded pressure (AS) during the determination period for the plurality of service solenoid valves (20) in the railway vehicle, and
the determination unit (76) determines the state of the service solenoid valve (20) based on comparison of the commanded pressures (AS) of the plurality of service solenoid valves (20) during the determination period.

8. A state determination program for a relay valve of a railway vehicle, causing a computer to perform the steps of:
acquiring an output pressure (BS) of a relay valve (30) that amplifies a flow of air supplied thereto to output the amplified flow of air to a brake cylinder (18), the output pressure (BS) being as large as a commanded pressure (AS) which a service solenoid valve (20) generates in accordance with a command signal (G), and the acquisition unit (74) also acquiring at least one of the command signal (G) and the commanded pressure (AS); and
determining a state of the relay valve (30) based on the output pressure (BS) in a determination period after at least one of the command signal (G) and the commanded pressure (AS) changes.

9. A state determination program for a service solenoid valve of a railway vehicle, causing a computer to perform the steps of:
acquiring a commanded pressure (AS) of a service solenoid valve (20) and a command signal (G), the service solenoid valve (20) generating, in accordance with the command signal (G), the commanded pressure (AS) that defines an output pressure (BS) of a relay valve (30), and the relay valve (30) amplifying a flow of air supplied thereto to output the amplified flow of air to a brake cylinder (18); and
determining a state of the service solenoid valve (20) based on the commanded pressure (AS) during a determination period after the command signal (G) changes.

10. A computer-readable storage medium storing a state determination program for a relay valve of a railway vehicle according to claim 8 or a state determination program for a service solenoid valve of a railway vehicle according to claim 9.

11. A brake control device for a railway vehicle, comprising:
an acquisition unit (74) acquiring an output pressure (BS) of a relay valve (30) that amplifies a flow of air supplied thereto to output the amplified flow of air to a brake cylinder (18), the output pressure (BS) being as large as a commanded pressure (AS) which a service solenoid valve (20) generates in accordance with a command signal (G), and the acquisition unit (74) also acquiring at least one of the command signal (G) and the commanded pressure (AS);
a determination unit (76) determining a state of the relay valve (30) based on the output pressure (BS) in a determination period after at least one of the command signal (G) and the commanded pressure (AS) changes; and
a control unit controlling a brake of the railway vehicle based on a result of the determination by the determination unit (76).

12. A brake control device for a railway vehicle, comprising:
an acquisition unit (74) acquiring a commanded pressure (AS) of a service solenoid valve (20) and a command signal (G), the service solenoid valve (20) generating, in accordance with the command signal (G), the commanded pressure (AS) that defines an output pressure (BS) of a relay valve (30), and the relay valve (30) amplifying a flow of air supplied thereto to output the amplified flow of air to a brake cylinder (18);
a determination unit (76) determining a state of the service solenoid valve (20) based on the commanded pressure (AS) during a determination period after the command signal (G) changes; and
a control unit controlling a brake of the railway vehicle based on a result of the determination by the determination unit (76).
